# EUROPEAN PATENT SPECIFICATION

(11) **EP 0 615 530 B1**
(45) Date of publication and mention of the grant of the patent: **10.03.1999**
(21) Application number: 93900929.6
(22) Date of filing: 04.12.1992
(51) Int. Cl.: C08K 5/06, C08L 7/02, C09J 125/10, C09J 7/02

(54) **ELASTOMERIC PRESSURE-SENSITIVE ADHESIVE COMPOSITIONS EXHIBITING GOOD CUTTING PERFORMANCE**
ELASTOMERE DRUCKEMPFINDLICHE KLEBSTOFFZUSAMMENSETZUNGEN MIT GUTEM SCHNITTVERHALTEN
COMPOSITIONS ADHESIVES ELASTOMERES AUTO-COLLANTES A DECOUPAGE AISE

(30) Priority: 06.12.1991 US 802881
(43) Date of publication of application: 21.09.1994
(73) Proprietor: AVERY DENNISON CORPORATION, Pasadena, CA 91109 (US)
(72) Inventor: SASAKI, YUKIHIKO, Claremont, CA 91711 (US); ERCILLO, Jesse, Concepcion, Covina, CA 91722 (US)
(74) Representative: Kirkham, Nicholas Andrew
(86) International application number: US9210549
(87) International publication number: WO9311187

(56) References cited:
- US-A- 4 042 555
- US-A- 4 125 665
- US-A- 4 379 095
- US-A- 4 548 845
- US-A- 4 923 515

## Description

### Field of the Invention

The present invention is directed to elastomeric rubber based pressure-sensitive adhesive compositions used in label and tape manufacture where the adhesive employed has improved cuttability and therefore convertability.

### Background of the Invention

During the process of converting pressure-sensitive bulk products such as rolls of a laminate of a face stock or backing, a pressure-sensitive adhesive layer, and a release liner into end products, many cutting operations are performed. These include slitting, sheeting, guillotining including hole punching and perforating, and die cutting on rotary and flat-bed machines.

Die cutting for label manufacture is the most complex. There, a laminate of a face stock or backing, pressure-sensitive adhesive layer and a release liner is passed through apparatus which converts the laminate to yield commercially useful labels from label stock. The processes involved in converting operations include printing, die cutting and matrix stripping to leave labels on a release liner, butt cutting of labels to the release liner, marginal hole punching, perforating, fan folding, guillotining and the like.

Die and butt cutting involve cutting of the laminate to the face of the release liner. Other procedures involve cutting clean through the label laminate and include hole punching, perforating and guillotining.

The cost of converting a laminate into a finished product is a function of the speed at which the various processing operations occur. While the nature of all layers of the laminate can impact cost of convertability, the adhesive layer has been the greatest limiting factor in ease and cost of convertability. This is in consequence of its viscoelastic nature which hampers precise and clean penetration of a die in die cutting operations and promotes adherence of the adhesive to cutting blades and the like in converting operations.

For slitting and sheeting, the cutting blade, because of adhesive adherence, becomes tacky and forms so called "gum balls." The gum balls transfer to the surface of paper and produce product defects. Quite often, the operators have to stop the cutting operation and clean the blade. Placing a lubricant such as mineral oil on the surface of the blade can help the cutting process.

For die cutting, poor cutting causes matrix breaks when waste matrix is peeled off. In order to avoid the matrix breaks, the press operators are forced to lower the converting speed.

For guillotining where stacks of sheets are cut at the same time, the cutting edge of the paper tends to become tacky. As a result the separation of each sheet becomes difficult and subsequent printing process may be jammed.

In order to improve the converting process, minimization of adhesive adherence to cutting blades is most important.

US-A-4,151,319 and 4,346,189 claim addition of silicone oil and gums to adhesive compositions. These additives improve cutting performance, but at a sacrifice in adhesion.

While not directly related to cutting performance, US-A-4,693,935 discloses polysiloxane-grafted adhesive copolymers. The adhesive compositions claimed are repositionable with adhesive-bonding building upon dwell for an extended time.

US-A-4,548,845 teaches the addition of a polyoxyalkylene polyol such as polyethylene glycol to tackified water-insoluble adhesives to reduce the adhesive build-up on a knife blade during guillotine cutting. This has resulted in phase separation and incompatibility in some adhesive systems.

### Summary of the Invention

According to the invention, cutting performance of pressure-sensitive adhesive compositions is improved by the addition of block copolymers with hydrophilic and hydrophobic blocks as defined in the claims with the following structures being preferred:

PEO-PPO-PEO (1)

PPO-PEO-PPO (2)

(PEO-PPO-)₄ (3)

(PPO-PEO-)₄ (4)

where PEO is a hydrophilic polyethylene-oxide block and PPO is a hydrophobic polypropylene-oxide block. The inclusion of a compatible wax in an amount up to 15% by weight of the total composition and can be effective to improve guillotinability or cuttability. The presently preferred wax is a polyethylene glycol wax, specifically Carbowax™ 1450.

The surfactants may be employed in a concentration of from about 1% to about 15% by weight of the resin, and have an HLB (hydrophilic-lipophilic balance) value in excess of 7, preferably from 12 to greater than 24. To our surprise, addition of these surfactants to hot melt compositions not only improves cutting performance of adhesive laminates, but also three major advantages over the prior art were found.

Due to the hydrophobic nature of the polypropylene-oxide block, these surfactants are compatible with rubber-based adhesives and are easy to handle; phase separation is not a problem.

The pressure-sensitive adhesive is preferably coated onto a silicone-coated release paper, and any additive added to the pressure-sensitive adhesive (PSA) preferably should not adversely affect the release characteristics. When the surfactant (Pluronic F-108) was added to a hot melt formulation, release characteristics were not affected greatly at all speed ranges tested (up to 300 m/min). (See Table 2 below for description of Pluronic F-108.) When polyethyleneglycol is added to a similar adhesive composition, high speed release became adversely affected and became harder to release. One of the converting process includes label making process where rotary die cutting and matrix stripping is quite often the rate determining process. The matrix stripping requires good release characteristics over a wide range of speeds and is especially important at high speeds. If the release is too tight the matrix breaks and converting speed suffers. Even if cutting performance is improved, this may not overcome matrix stripping difficulties. When conversion was tested on a highspeed Mark Andy Press compositions containing polyethylene glycol showed convertability worse than adhesive without additives, while Pluronic F-108 addition increased converting speed markedly.

The elastomeric or rubber-based pressure-sensitive adhesive is based on a combination of two or more immiscible elastomers which, when combined in proper proportion, provide at least two glass transition temperatures, and by the addition of one or more tackifiers. Addition of one or more of the tackifiers produces an increase in the difference between the two glass transition temperatures as a consequence of preferential miscibility of the tackifier in the elastomer having the highest glass transition temperature and an amplification of tangent delta of the elastomer having the higher glass transition temperature. Although explained in terms of diene elastomers, the invention is contemplated to be applicable to immiscible tackifiable and internally tackified polymers including, but not limited to, acrylic ester based polymers and the like.

In a preferred aspect, the invention is based on an admixture of a first elastomer providing a first polymerized diene, preferably polybutadiene, and exhibiting a first glass transition temperature and a second natural or synthetic elastomer providing a second polymerized diene component, preferably polyisoprene, and having a second glass transition temperature higher than the first. The elastomers are mixed in proportion to exhibit a dynamic mechanical spectrum (DMS), i.e., a plot of a tangent delta (the ratio of G" to G' as defined herein) against temperature, with at least two, as opposed to one, distinct peaks corresponding to glass transition temperatures of the first polymerized diene (polybutadiene) and second polymerized diene (polyisoprene) components of the immiscible blend. A tackifying system comprising at least one solid tackifier is added to increase the glass transition temperature of at least the second peak in order to increase the temperature differential between the peaks, while increasing the amplitude (tangent delta) of the second (polyisoprene) peak. Shifting at least the second peak toward ambient temperature improves ambient temperature pressure-sensitive adhesive performance. The maintenance of the first peak assures low temperature pressure-sensitive adhesive performance. Low values of tangent delta give good processability and cuttability.

The immiscible rubbers are provided in proportion of the polybutadiene containing elastomer to the polyisoprene containing elastomer from 0.5:1 to 5:1 and comprise from 20% to 50% by weight of the total weight of the mixture of elastomers and tackifying additive.

The tackifying system is preferentially soluble in the polyisoprene component and comprises a normally solid tackifying resin, preferably based on polymerized structures derived from aliphatic dienes and mono-olefins containing 5 or 6 carbon atoms, preferably with at least 40% of the structures derived from piperylene or from piperylene and isoprene, aromatic resins which are hydrogenated to the degree that substantially all of the benzene rings are converted to cyclohexane rings, and hydrogenated polycyclic resins such as hydrogenated dicyclopentadiene resins. The additive system preferably includes a normally liquid tackifying resin which is preferentially soluble in the polyisoprene component. Other constituents of the tackifying system may include rosin, rosin ester and polyterpenes which are at least partially compatible with the polyisoprene component, and plasticizing oils. The additives do not, however, limit the function of the tackifiers, namely, increasing the glass transition temperature differential between the peaks.

Presently preferred compositions are those in which the ratio of the polybutadiene-based elastomer to the polyisoprene-based elastomer is about 1.3:1 and present in about 15% to about 30% by weight based on the total composition, the balance of the composition, except for inhibitors, antioxidants and other modifiers, are tackifiers.

The invention is also useful in improving cutting performance of natural rubber (polyisoprene) based adhesives as well as styrene-isoprene and styrene butadiene di and triblock copolymers.

### The Drawings

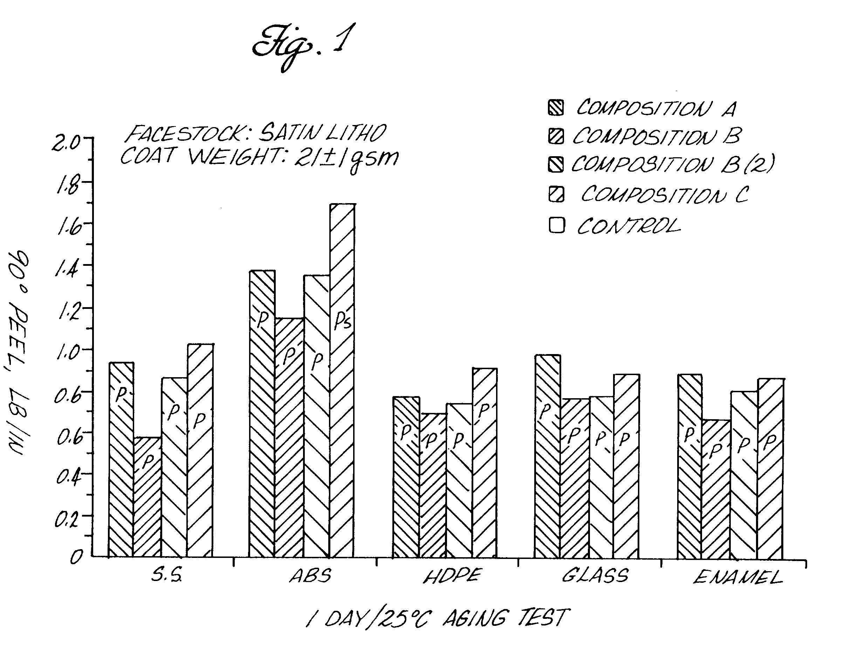

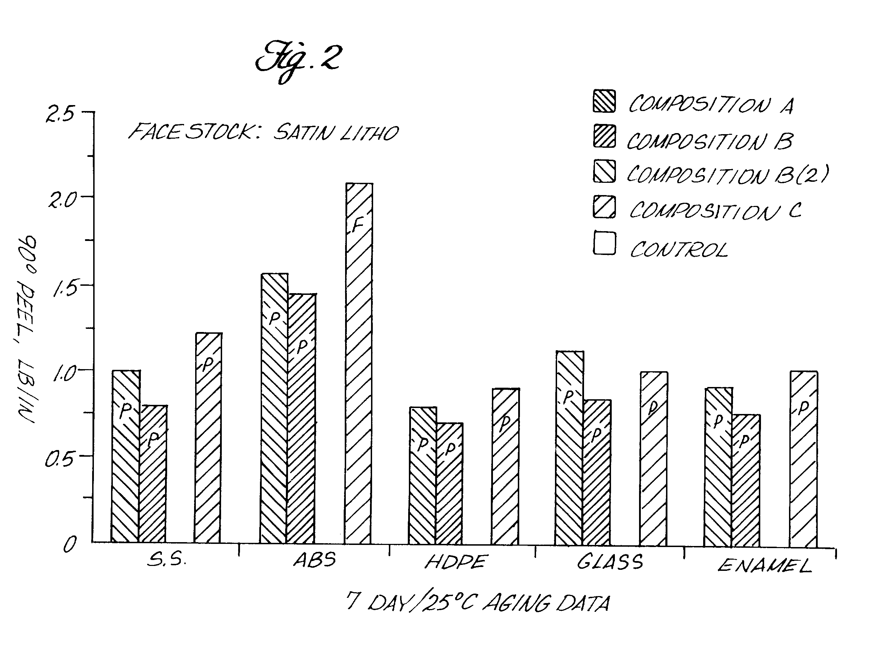

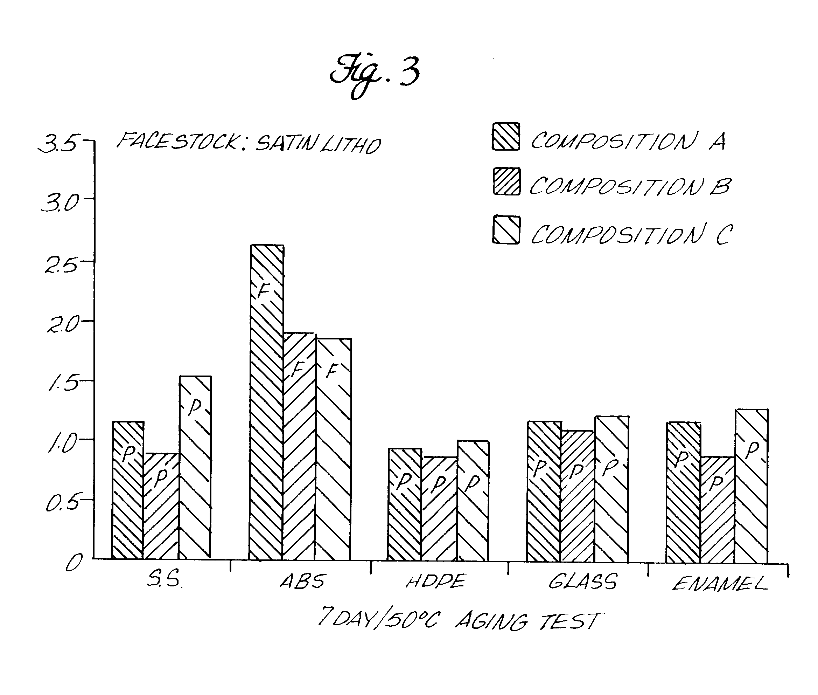

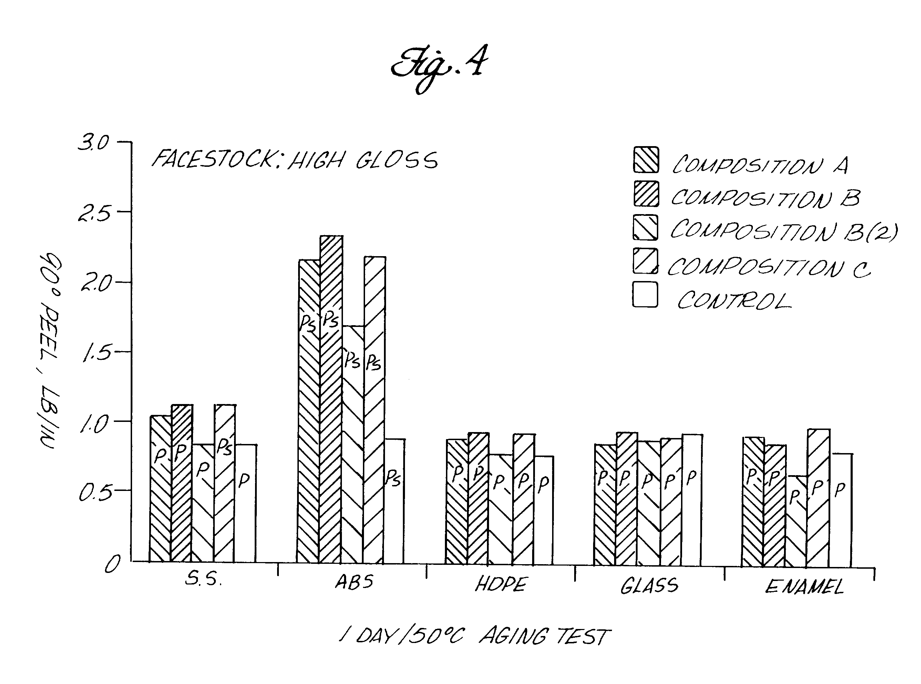

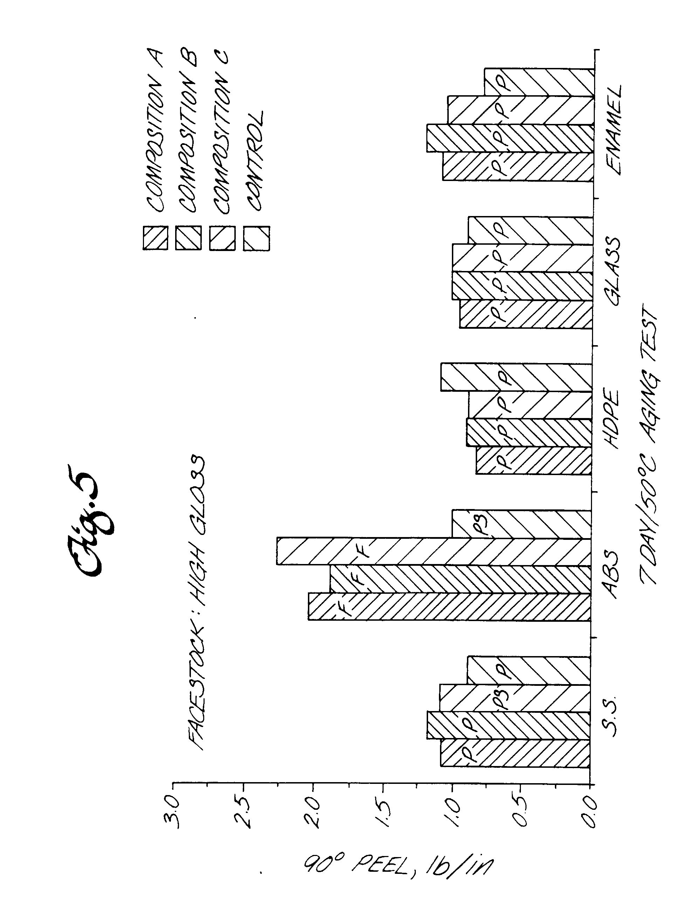

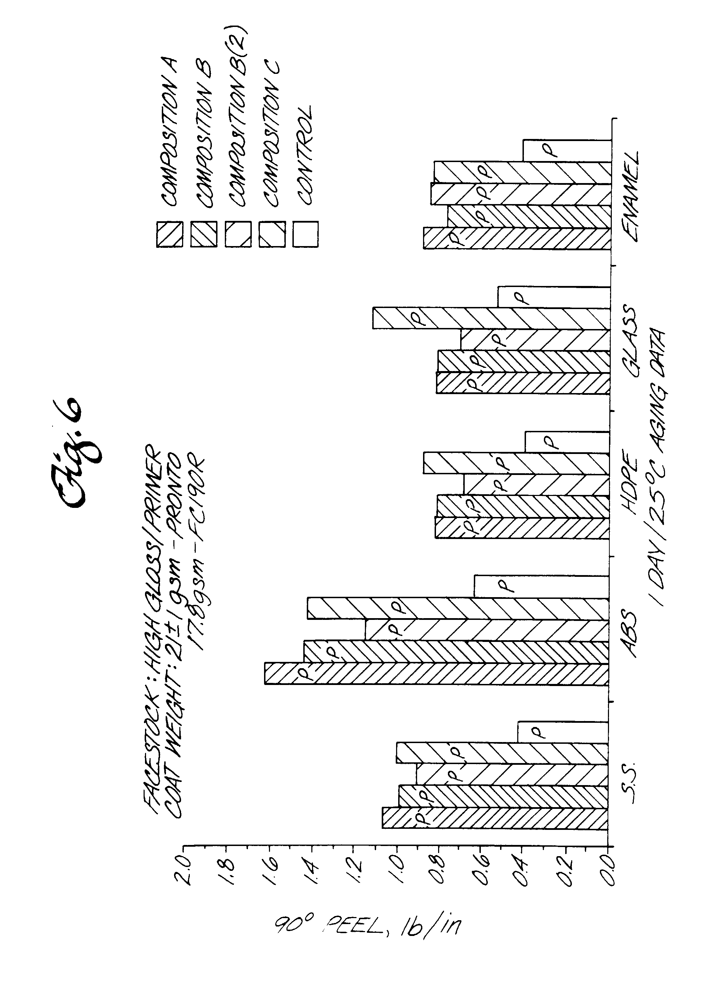

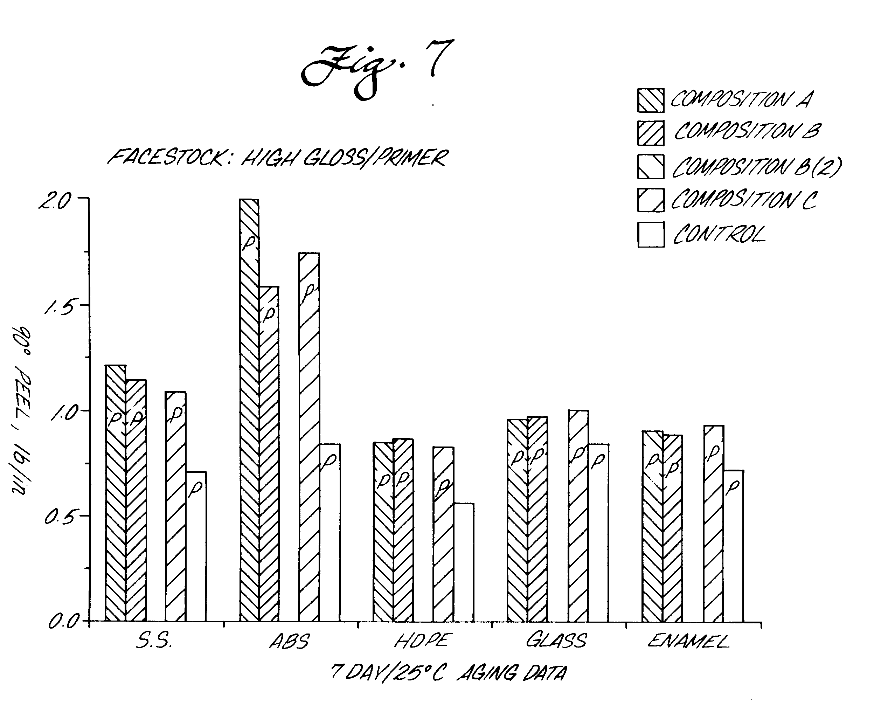

FIGS. 1 to 7 are block diagrams illustrating 90° peel to various substrates of the composition identified in Table 8 and are based on the date reported in Tables 9 and 10. The face stocks or backing were satin litho, high gloss paper and primed high gloss paper. In the FIGURE, "p" means panel failure, "ps" means panel stain and "F" means face stock failure.

### Detailed Description

The present invention is directed to improving the cuttability of hot-melt elastomeric pressure-sensitive adhesives, especially adhesives based on polymers of butadiene and isoprene, mixtures of two immiscible natural or synthetic elastomers, preferably one based on a first polydiene, preferably polybutadiene or one containing polybutadiene blocks, exhibiting a first glass transition temperature and a value of tangent delta and the other based on a second polydiene, preferably polyisoprene or one containing polyisoprene blocks exhibiting a second glass transition temperature higher than the first and a second value of tangent delta associated therewith. The two elastomers are combined in proportion whereby there is exhibited two distinct glass transition temperature peaks in a DMS curve, a plot of tangent delta as a function of temperature in °C. There is provided to the composition a tackifying system which comprises tackifiers preferentially soluble in the second polydiene component which cause the temperature differential between the glass transition temperature peaks in the DMS curve to increase and the amplitude of the tangent delta for the second glass transition temperature to also increase. The net result is to provide a pressure-sensitive adhesive composition exhibiting improved conversion as seen in ability to cut the adhesive and excellent low and ambient temperature pressure-sensitive adhesive performance. The performance of the adhesive is improved even more by additives which also benefit cuttability of tackified styrene-butadiene-styrene, styrene-butadiene, styrene-isoprene-styrene,styrene-isoprene and like copolymers as well as natural rubbers (polyisoprene) and other related elastomer polymers. The additives may be used in solvent, emulsion and hot-melt adhesives.

The preferred adhesives systems are described in detail in US-A-5 290 842.

As used for such adhesive, "tackifier system" consists of tackifiers include normally liquid and solid tackifiers which leave unchanged the glass transition temperature of the elastomeric block in which they are not soluble. There may also be employed plasticizer oils which lower the glass transition temperature. Tackifier systems used in the practice of the instant invention, include conventional tackifiers and plasticizer oils, and for the preferred blends of incompatible elastomers have the net effect of being preferentially soluble in the polyisoprene block so as to preferentially increase the difference between the glass transition temperature of the polyisoprene block component relative to the polybutadiene block component, with an increase (amplification) of the tangent delta of the polyisoprene peaks of the pressure-sensitive adhesive composition.

More particularly, polymers used in formulating the pressure-sensitive adhesives of this invention are based on natural and/or synthetic elastomeric polymers. Useful are AB, ABA and (AB)ₓ block copolymers wherein x has a value of 3 or more and wherein A is a block comprising at least one monoalkenyl arene, preferably styrene, alpha methyl styrene, vinyl toluene and the like, and B is an elastomeric conjugated diene block, preferably a polybutadiene or a polyisoprene block. Preferably at least one is based on polybutadiene blocks and one other is based on polyisoprene blocks. These include, but are not limited to, homopolymers, block, random or multiarmed copolymers, and mixtures thereof. Among the useful elastomeric polymers there may be mentioned natural rubber (polyisoprene), polybutadiene, synthetic polyisoprene, random styrene-butadiene polymers, styrene-butadiene (SB) block copolymers, multiarmed and repeating (SB) copolymers, styrene-butadiene-styrene (SBS) block copolymers, styrene-isoprene (SI) block copolymers, styrene-isoprene-styrene (SIS) block copolymers, multiarmed styrene-isoprene (SI)ₓ block copolymers, and the like. It will be understood that random copolymers may also be used and can reverse the diene preferentially tackified so long as the glass transition temperature of the polymer exhibiting the highest glass transition temperature is increased relative to the polymer of lower glass transition temperature.

Commercial elastomeric polymers used include linear SIS/SI block copolymers known as Kraton D-1107 and D-1112, SBS/SB block copolymers known as Kraton D-1101, D-1102 and DX-1300, and an (SI)ₓ block copolymer known as Kraton D-1320X, all manufactured and sold by Shell Chemical Company, and an SB block copolymer known as Solprene 1205 manufactured and sold by Housemex, Inc. As indicated, in many of the SIS or SBS block copolymers, there are respectively present SI or SB components.

Other elastomers, such as the ethylene-propylene diene rubbers, styrene-ethylene/butylene, styrene block copolymers, styrene-ethylene/propylene-styrene block copolymers and the like, may also be used.

The weight ratio of the polybutadiene containing constituents of the mixture to the polyisoprene constituents of the mixture are such that there are provided two peaks on the DMS curve for the mixture. Generally, weight ratios range from 0.5:1 upward. Compositions contemplated to be used in accordance with the instant invention are combined in ratio of 0.5:1 to 5:1, preferably from 1:1 to 1.5:1, and most preferably from 1.3:1.

Tackifier additives for the polyisoprene component are preferably obtained by the polymerization of a stream of aliphatic petroleum derivatives in the form of dienes and mono-olefins containing 5 or 6 carbon atoms generally in accordance with the teachings of US-A-3,577,398 and 3,692,756. The resultant hydrocarbons range from materials which are normally liquid at room temperature to those which are normally solid at room temperature and typically contain 40% or more by weight polymerized dienes. The dienes are typically piperylene and/or isoprene. They are sold by the Chemical Division of Goodyear Tire and Rubber Company as the Wingtack family of resins with the numerical designation being the softening point, e.g., Wingtack 95 which is normally a solid resin having a softening point of about 95°C and Wingtack 10 which is normally a liquid resin having a softening point of about 10°C.

Other normally solid tackifiers are Escorez 1310 LC manufactured by Exxon and Piccotac 95 manufactured by Hercules.

Other additives which may serve a tackifier function include hydrogenated aromatic resins wherein a very substantial portion, if not all, of the benzene rings are converted to cyclohexane rings (for example, the Regalrez family of resins manufactured by Hercules such as Regalrez 1018, 1033, 1065, 1078 and 1126, and Regalite R-100, and the Arkon family of resins from Arakwa Chemical such as Arkon P-85, P-100, P-115 and P-125), hydrogenated polycyclic resins (typically dicyclopentadiene resins such as Escorez 5300, 5320, 5340 and 5380 manufactured by Exxon) and the like.

There can be also added rosins, rosin esters, polyterpenes and other tackifiers which are compatible to some degree with the polyisoprene and polybutadiene phases. Other additives include plasticizer oils such as Shellflex 371 manufactured by Shell and Kaydol mineral oil manufactured by Witco which are soluble in both the polyisoprene and polybutadiene phases.

The tackifier system may be present in an amount, based on the total weight of tackifier system and elastomers, of from 50% to 80% by weight, preferably from 50% to 70% by weight, more preferably from 60% to 70% by weight. The presently preferred ratio is about 38% by weight elastomer and about 62% by weight tackifying resin additive, the resin additive preferably being a mixture of a normally solid tackifier such as Wingtack 95 or Escorez 1310 LC and a normally liquid tackifier such as Wingtack 10 or a plasticizer oil such as Shellflex 371. Polystyrene reinforcing additives may be present but are not required.

The surfactants employed to improve cuttability of the above-mentioned adhesive systems are block copolymer surfactants preferably having hydrophilic polyethylene-oxide (PEO) blocks and hydrophobic polypropylene-oxide (PPO) blocks and are generally of the formula:

PEO-PPO-PEO, (1)

PPO-PEO-PPO, (2)

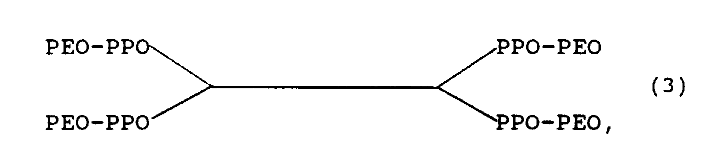

and 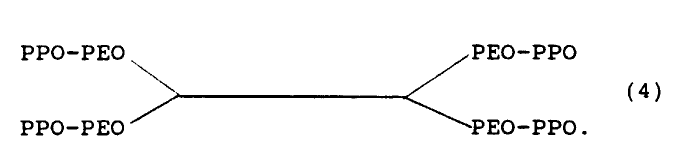 Mixtures may also be used. Surfactants of formulas (1) and (2) above are Pluronic^{TM} surfactants, and surfactants of formulas (3) and (4) above are known as the Tetronic surfactants. Both are made by BASF. The presently preferred surfactant is Pluronic F-108 which has a molecular weight of 14600 and an HLB of greater than 24.

The surfactant may be employed in concentration of from 1% to 6% by weight of surfactant and elastomer, preferably from 2% to 5% by weight, with optimized concentration varying depending on the nature of the surfactant and/or the adhesive polymer. The HLB value exceeds 7, and preferably at least 12, and most preferably at least 24.

The surfactant may be augmented by the addition of 0 to 15% by weight of the total composition of a wax including natural waxes such as montan wax, carnauba wax, bees wax and the like, synthetic waxes such as polyethylene and polypropylene waxes, Fischer-Tropsch waxes, microcrystalline waxes and the like. It is presently preferred to employ polyethylene glycol waxes, preferably Carbowax™ 1450.

While, as will be seen, the pressure-sensitive adhesive formulations of the instant invention exhibit excellent low temperature and ambient temperature performance as well as convertability, it may be desirable to enhance elevated temperature performance. This may be accomplished by cross-linking techniques such as the use of electron beam (EB) radiation or ultraviolet (UV) radiation or chemical cross-linking or a combination of these. If employed, it is desirable that tackifying additives be substantially saturated such that all of the energy of cure goes into cross-linking of the elastomeric components of the adhesive.

The following adhesive composition is the presently preferred hot melt adhesive as used to evaluate various surfactants identified in the tables to follow, and is the control when used with no surfactant additive:

| Elastomer and tackifier system: | |
|---|---|
| Solprene 1205 | 21.2% |
| Kraton 1107 | 16.8% |
| Escorez 1310 LC | 24.0% |
| Wingtack 10 | 38.0% |

| Antioxidants: | |
|---|---|
| Ethyl 330 | 0.7 pph |
| Cyanox LTDP | 0.7 pph |

In the following tables a blade rating lower than 3 is regarded as representing an improvement in cuttability, with 3 being the blade rating for the adhesive alone. A blade rating of 3 or greater represents cuttability that was not improved.

In the Following Tables:
"BCS" means block copolymer surfactant
"pph" means parts by weight per 100 parts adhesive
"N/m" means Newtons per meter
"RT" means room temperature
"QS" means quick stick
"PE" means polyethylene
"CB" means recycled cardboard
"GL" means glass
"SS" means stainless steel
"HR" means hour
"DW" means dwell
"SL" means slight

The following tables describe experiments which illustrate the benefits of the addition of block copolymer surfactants to pressure-sensitive adhesives.

In Tables 1, 4 and 7, the examples of a composition having an HLB of 1-7 are provided as comparative examples, as are compositions A, B+B(2) and the "Control", in Tables 8-10.

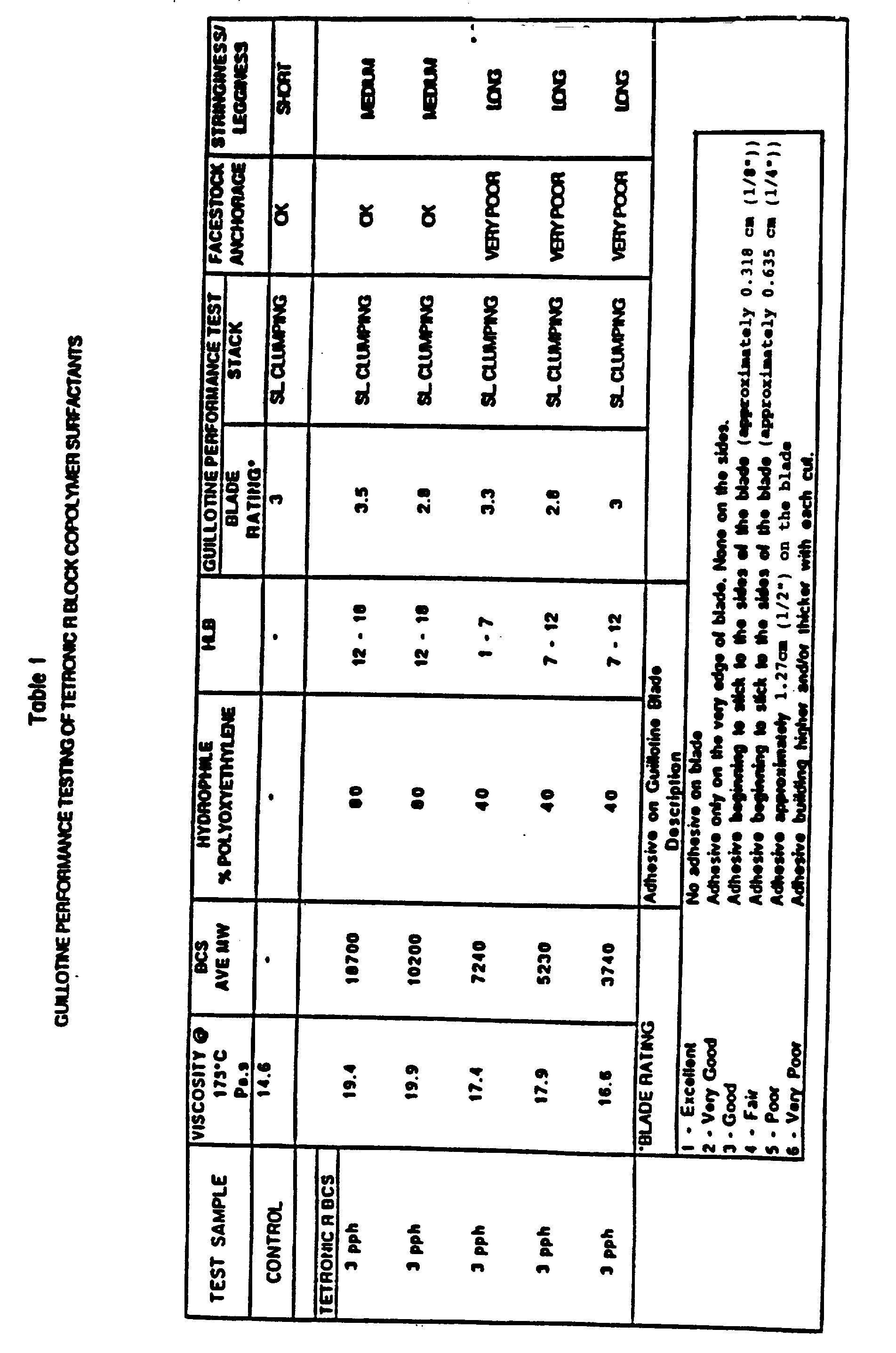

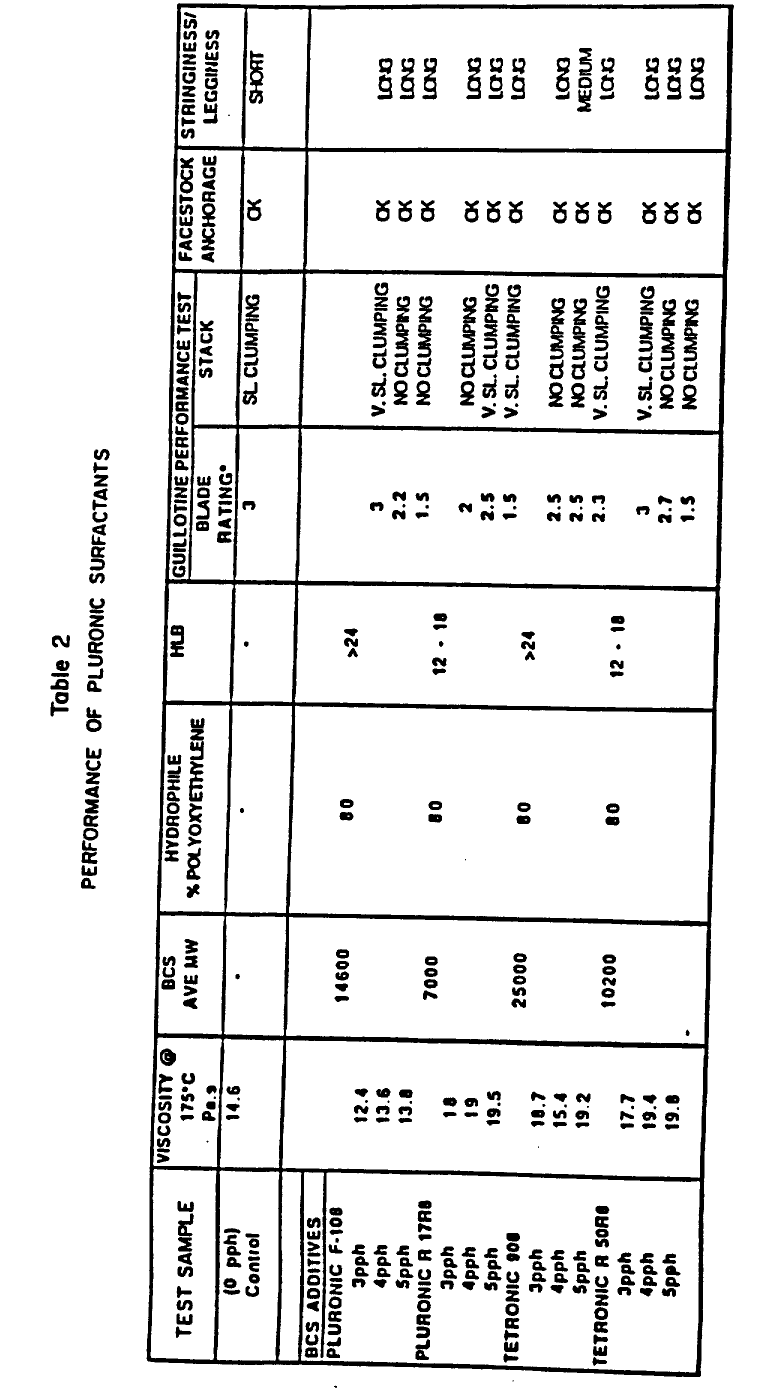

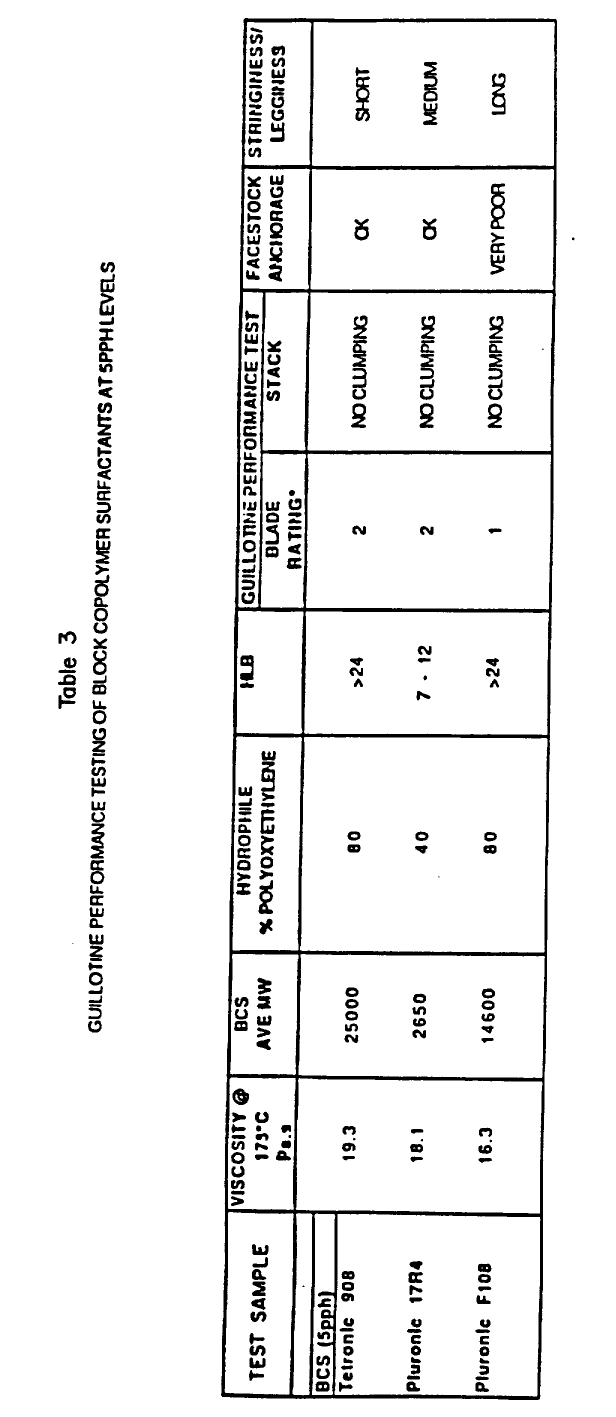

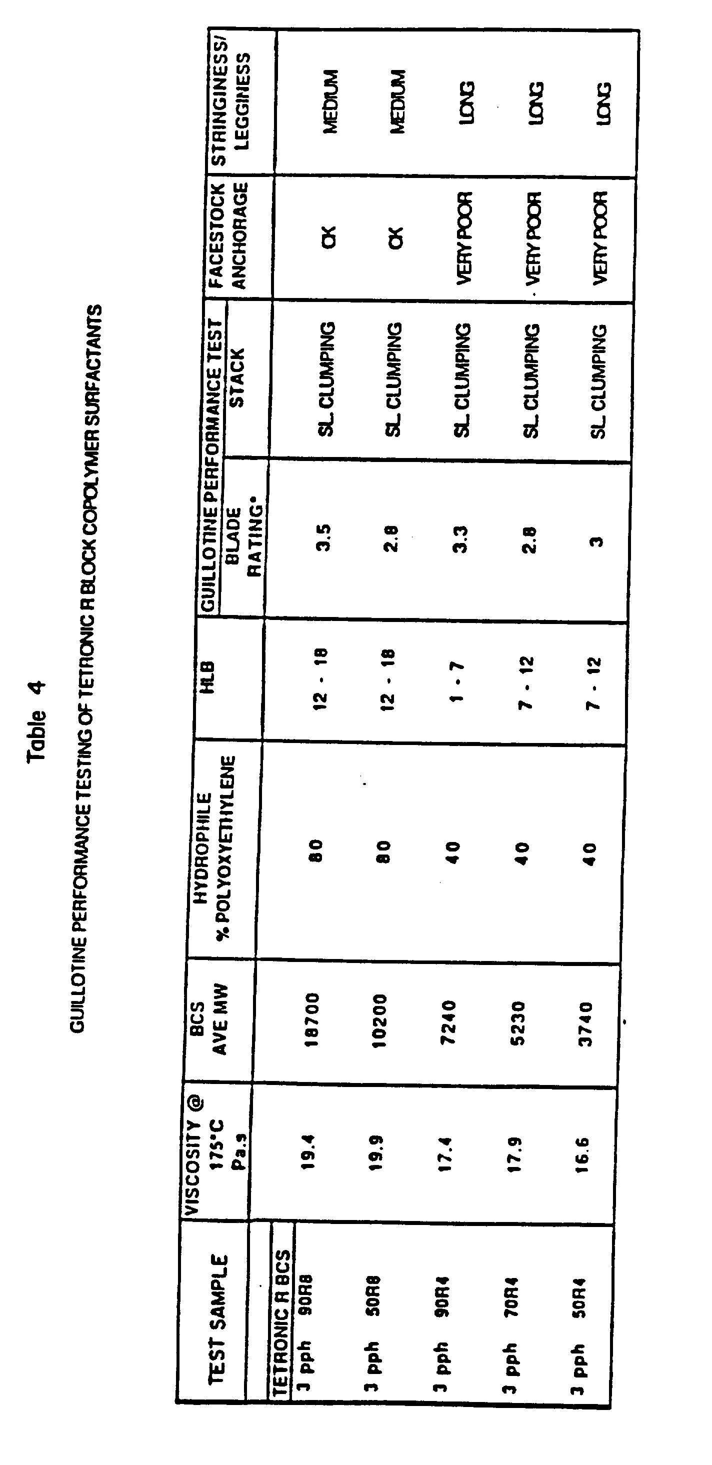

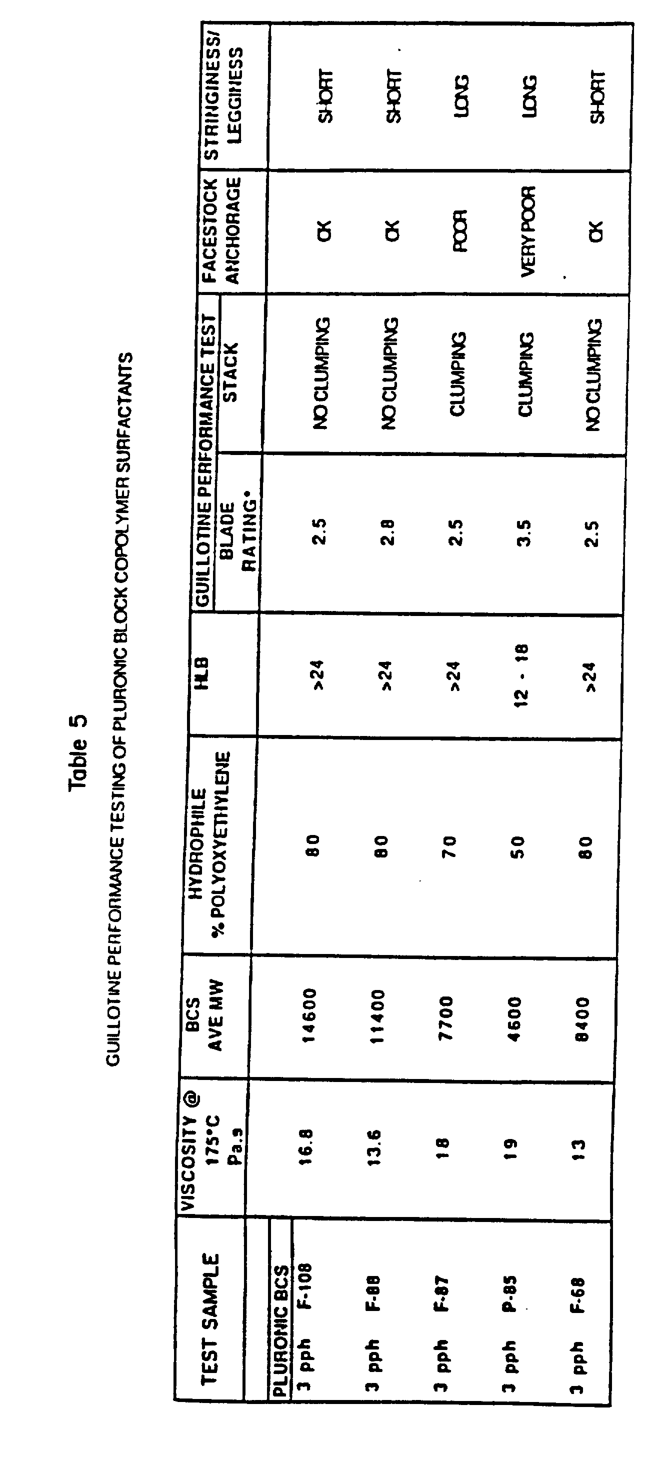

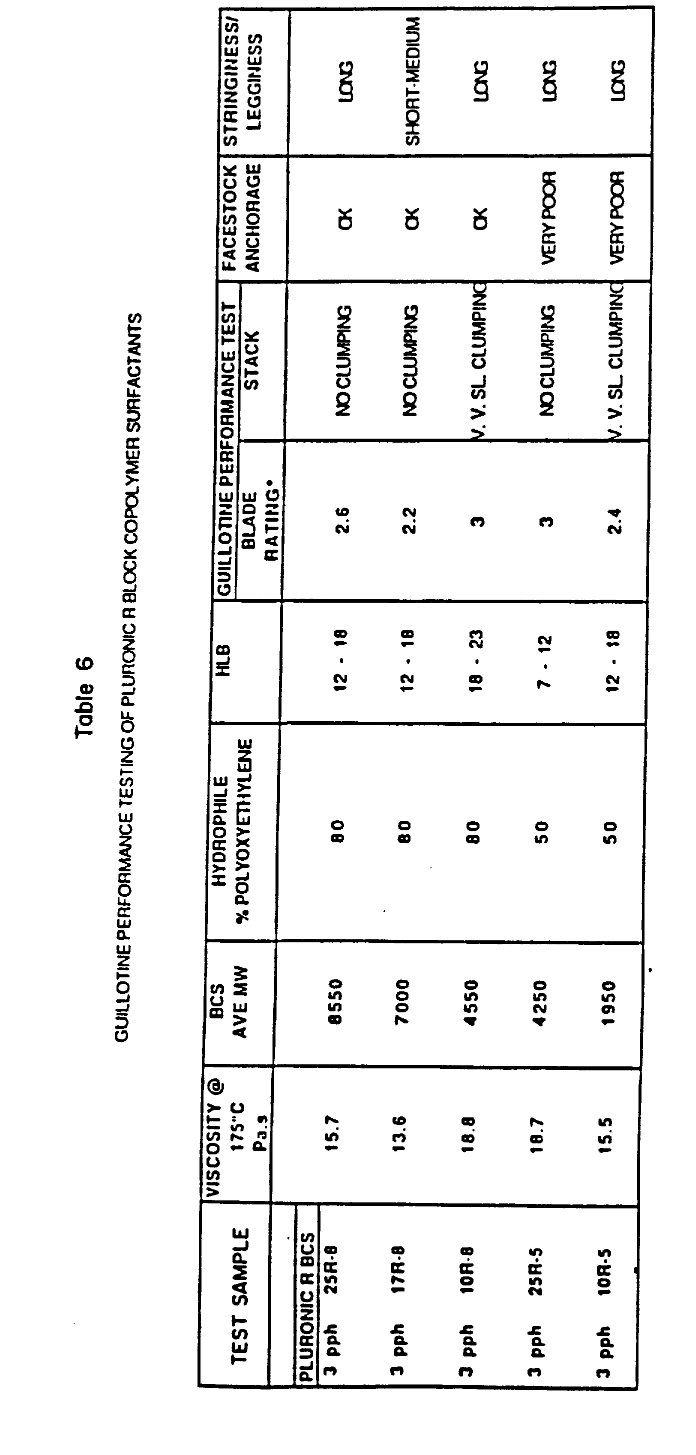

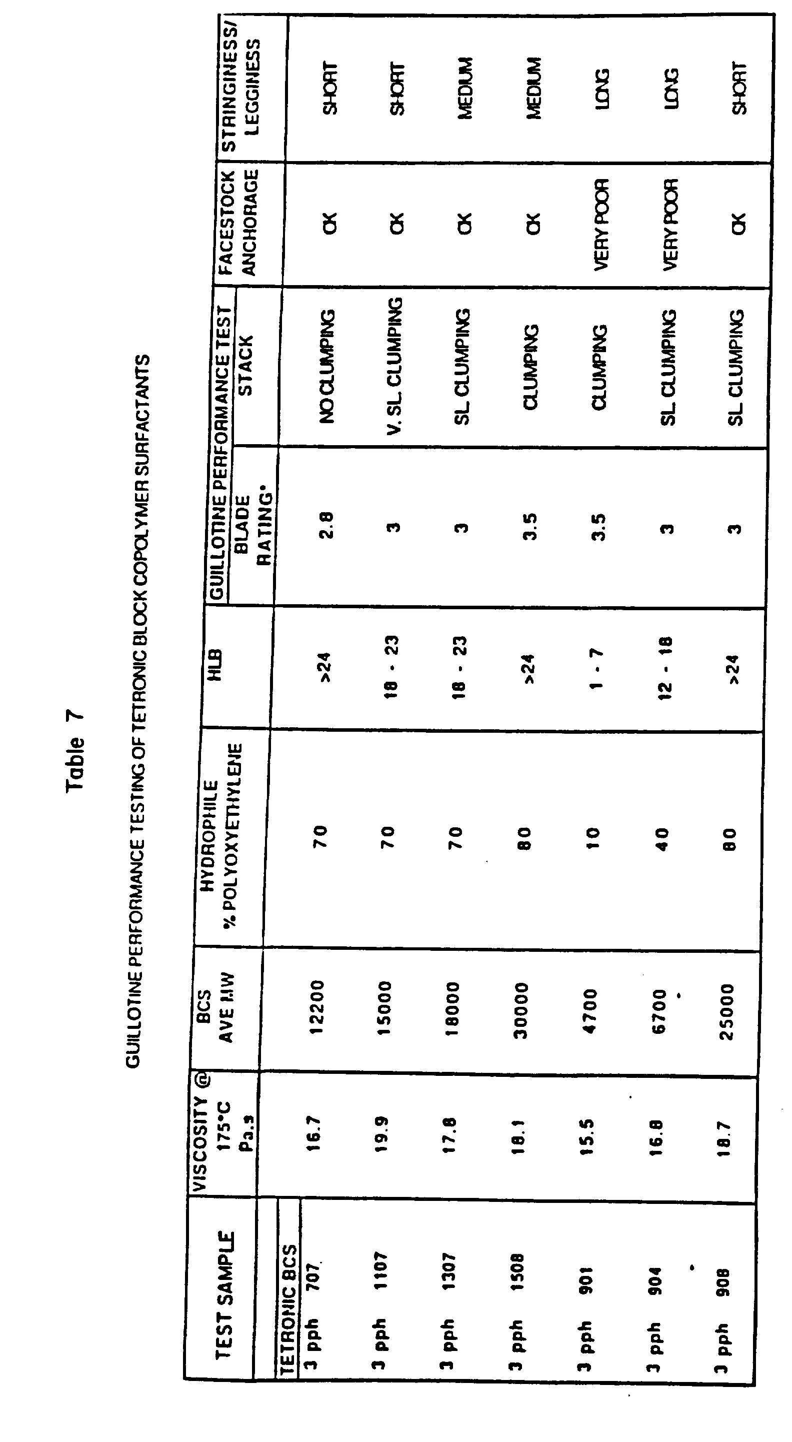

### Tables 8, 9 and 10:

Table 8 shows compositions based on the addition of Carbovax™ 1450 to compositions of the invention while Tables 9 and 10 report the adhesive performance of such compositions, some to a control which was a solvent-based removable adhesive based on butyl rubber which had a guillotine value of 0.1875. Composition B(2) is a repeat of Composition B.

**Table 8**

| | Comparative Composition A | Comparative Composition B + B(2) | Composition C |
|---|---|---|---|
| | PPH | PPH | PPH |
| KRATON RP6403 (SIS/SI) | 34 | 42 | - |
| DPX 512 (100% SIS) | - | - | 18 |
| SOLPRENE 1205 (SB) | - | - | 24 |
| ECR 143 (Tackifier) | 50 | 41 | 41 |
| PLURONIC F108 (Surfactant) | 11 | 5 | 12 |
| CARBOWAX 1460 (Wax) | 5 | 12 | 5 |
| CAMEL WITE (Opacifier) | 5 | 5 | 5 |
| IRGANOX 565 (antioxidant) | 0.3 | 0.3 | 0.3 |
| IRGAFOS 168 (antioxidant) | 0.6 | 0.6 | 0.6 |
| (GUILLOTINE) | 0.1875 | 0.1875 | 0.25 |
| BLADE SMEAR HT. cm (inches) | | 0.476 cm (0.1875 inches) | |

**Table 9**

| | S.S. | ABS | HDPE | Glass | Appliance Enamel |
|---|---|---|---|---|---|
| 1 Day/25°C | | | | | |
| Comparative Composition A | 1.07,p | 1.63,p | 0.82,p | 0.82,p | 0.889,p |
| Comparative Composition B | 0.992,p | 1.44,p | 0.81,p | 0.81,p | 0.77,p |
| Comparative Composition (B)2 | 0.906,p | 1.15,p1 | 0.69,p | 0.70,p1 | 0.85,p |
| Composition C | 1.005,p1 | 1.43,p1 | 0.88,p | 1.12,p1 | 0.833,p1 |
| Control | 0.426,p | 0.639,p1 | 0.398,p | 0.528,p | 0.41,p |
| | | | | | |

| 7 Day/25°C | | | | | |
|---|---|---|---|---|---|
| Comparative Composition A | 1.21,p | 1.99,pt | 0.842,p | 0.956,p | 0.90,p |
| Comparative Composition B | 1.15,p | 1.59,p1 1 | 0.86,p | 0.97,p | 0.88,p |
| Composition C | 0.922,p | 1.32,pt | 0.59,p | 0.881,p1 | 0.942.p |
| Control | 0.71,p | O.84,p1 | 0.558,p | 0.846.p | 0.718,p |
| | | | | | |

| 14 Day/25°C | | | | | |
|---|---|---|---|---|---|
| Comparative Composition A | 1.272,p | 2.327,p2 | 0.915,p | 0.98,p | 0.97,p |
| Comparative Composition B | 1.174,p | 1.49,p1 | 0.86,p | 0.96.p | 0.95,p |
| Composition C | 0.957.p | 1.44,pt | 0.68,p | 1.0,p | 1.10,p |
| Control | 0.85,p | 0.90,p1 | 0.7,p | 0.917,p | 0.822,p |
| Facestock: 011-24/P-32 Coat Weight: 21 ± gsm p1: very light shade p2: light staining p3: heavy staining pt: paper tore | | | | | |

**Table 10**

| | S.S. | ABS | HDPE | Glass | Appliance Enamel |
|---|---|---|---|---|---|
| 1 Day/50°C | | | | | |
| Comparative Composition A | 1.05,p1 | 2.16,F | 0.89,p | 0.87,p1 | 0.93,p |
| Comparative Composition B | 1.03,p1 | 2.34,F | 0.933,p | 0.95,p1 | 0.81,p1 |
| Composition C | 0.85,p1 | 1.69,p2 | 0.78,p | 0.89,p1 | 0.65,p1 |
| Control | 0.845,p1 | 0.89,p2 | 0.77,p1 | 0.941,p | 0.81,p |
| | | | | | |

| 14 Day/50°C | | | | | |
|---|---|---|---|---|---|
| Comparative Composition A | 1.09,p1 | 2.049,p3 | 0.84,p | 0.96,p1 | 1.101,p |
| Comparative Composition B | 1.19,p1 | 1.893,F | 0.904,p | 1.02,p1 | 1.207,p1 |
| Composition C | 1.81,pt | 1.625,p3 | 0.77,p1 | 1.16,p1 | 1.10,p2 |
| Control | 0.894,p | 1.01,p2 | 1,10,p1 | 0.911,p | 0.791,p |
| | | | | | |

| 28 Day/50°C | | | | | |
|---|---|---|---|---|---|
| Comparative Composition A | 1.81,p3 | 1.125,p3 | tore | 2.0,p3 | 0.82,p3 |
| Comparative Composition B | 0.82,p3 | 1.55,p3 | 1.23,p3 | 1.08,p3 | 1.13,p3 |
| Composition C | 1.44,p3 | NA | 0.75,p2 | 1.11,p3 | 1.38,p3 |
| Control | 1.03,p | 1.33,p2 | 2.14,pt | 1.11,p | 1.048,p |
| Facestock: 011-24/P-32 Coat Weight: 21 ± gsm p1: very light shade p2: light staining p3: heavy staining pt: paper tore | | | | | |

## Claims (Claims for the following Contracting State(s): AT, BE, CH, LI, DE, DK, FR, GB, IE, IT, LU, NL, SE)

1. A pressure-sensitive adhesive composition exhibiting improved cuttability, for use in a pressure-sensitive label construction, said composition comprising a mixture of
(a) a hot-melt, elastomeric pressure-sensitive adhesive comprising a combination of at least two mutually immiscible elastomers which, when combined, provide at least two glass transition temperatures, and a tackifying system comprising at least one tackifier that is preferentially soluble in the elastomer of highest glass transition temperature; and
(b) an effective amount of a surfactant comprised of hydrophillic polyethylene oxide blocks and hydrophobic polypropylene oxide blocks, said surfactant having a hydrophillic-lipophilic balance (HLB) value greater than 7;
(c) 0 to 15% by weight of the mixture of a compatible wax.

2. The pressure-sensitive adhesive composition according to claim 1, wherein component (a) comprises:
(i) the first elastomer contains a polybutadiene component and exhibits a first glass transition temperature and a first tangent delta measured as a function of temperature, and
(ii) the second elastomer contains a polyisoprene component and exhibits a second glass transition temperature that is greater than said first glass transition temperature and a second value of tangent delta measured as a function of temperature, said first and second elastomers provided in a proportion of 0.5:1 to 5:1, whereby a DMS plot of tangent delta as a function of temperature for the combination of elastomers exhibits two distinct peaks, one attributable to a polybutadiene component and the other attributable to a polyisoprene component, and
(iii) the tackifying system comprises at least one tackifier, preferentially soluble in the second elastomer and present in sufficient quantity to cause an increase in the temperature difference between said first and second glass transition temperatures and an increase in the amplitude of said second value of tangent delta.

3. The pressure-sensitive adhesive composition according to claim 1 or claim 2, wherein the surfactant is selected from the group consisting of compounds of the formula:
PEO-PPO-PEO,
PPO-PEO-PPO, 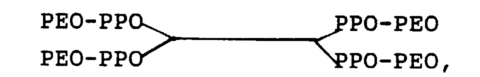 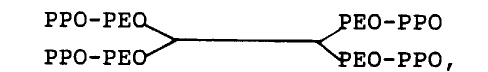
and mixtures thereof, wherein PEO denotes a hydrophillic polyethylene oxide block, and PPO denotes a hydrophobic polypropylene oxide block.

4. The pressure-sensitive adhesive composition according to any one of claims 1 to 3, wherein a first elastomer is selected from the group consisting of polybutadiene, styrene-butadiene block copolymers, styrene-butadiene-styrene block copolymers, styrene-butadiene multi-armed block copolymers, and mixtures thereof; and a second elastomer is selected from the group consisting of natural rubber, synthetic polyisoprene, styrene-isoprene block copolymers, styrene-isoprene-styrene block copolymers, styrene-isoprene multi-armed block copolymers, and mixtures thereof.

5. The pressure-sensitive adhesive composition according to any one of claims 1 to 4, wherein the tackifying system is selected from the group of tackifiers consisting of polymerized C₅ or C₆ diene resins that are solid, hydrogenated aromatic hydrocarbons that are solid, saturated cycloaliphatic hydrocarbons that are solid, and mixtures thereof, alone or in combination with a polymerized C₅ or C₆ diene tackifier that is liquid, a plasticizing oil, and mixtures thereof.

6. A pressure-sensitive adhesive composition according to any one of claims 1 to 5, wherein the surfactant is present in an amount of from 1 to 15% by weight, based on the weight of the surfactant and hot-melt, elastomeric pressure-sensitive adhesive.

7. The pressure-sensitive adhesive composition according to any one of claims 1 to 5, wherein the surfactant is present in an amount of from 2 to 5% by weight, based on the weight of the surfactant and hot-melt, elastomeric pressure-sensitive adhesive.

8. The pressure-sensitive adhesive composition according to any one of claims 1 to 7, wherein the wax is a polyethylene glycol wax.

9. The pressure-sensitive adhesive composition according to any one of claims 1 to 7, wherein the combination of immiscible elastomers comprises from 20 to 50% by weight of the total weight of the elastomers and tackifying system.

10. A pressure-sensitive adhesive composition as recited in any one of claims 1 to 9, wherein the tackifying system further comprises a tackifier selected from the group consisting of rosins, rosin esters and polyterpenes.

11. A pressure-sensitive adhesive composition as recited in any one of claims 1 to 10, wherein the surfactant has an HLB value of from 12 to greater than 24.

12. A pressure-sensitive adhesive label construction having a layer of an adhesive composition as recited in any one of claims 1 to 11 and sufficient to improve guillotinability of the resultant label construction.

## Claims (Claims for the following Contracting State(s): ES)

1. A method of producing pressure-sensitive adhesive composition exhibiting improved cuttability, for use in a pressure-sensitive label construction, said method comprising mixing a mixture of
(a) a hot-melt, elastomeric pressure-sensitive adhesive comprising a combination of at least two mutually immiscible elastomers which, when combined, provide at least two glass transition temperatures, and a tackifying system comprising at least one tackifier that is preferentially soluble in the elastomer of highest glass transition temperature; and
(b) an effective amount of a surfactant comprised of hydrophillic polyethylene oxide blocks and hydrophobic polypropylene oxide blocks, said surfactant having a hydrophillic-lipophilic balance (HLB) value greater than 7;
(c) 0 to 15% by weight of the mixture of a compatible wax.

2. The method according to claim 1, wherein component (a) comprises:
(i) the first elastomer contains a polybutadiene component and exhibits a first glass transition temperature and a first tangent delta measured as a function of temperature, and
(ii) the second elastomer contains a polyisoprene component and exhibits a second glass transition temperature that is greater than said first glass transition temperature and a second value of tangent delta measured as a function of temperature, said first and second elastomers provided in a proportion of 0.5:1 to 5:1, whereby a DMS plot of tangent delta as a function of temperature for the combination of elastomers exhibits two distinct peaks, one attributable to a polybutadiene component and the other attributable to a polyisoprene component, and
(iii) the tackifying system comprises at least one tackifier, preferentially soluble in the second elastomer and present in sufficient quantity to cause an increase in the temperature difference between said first and second glass transition temperatures and an increase in the amplitude of said second value of tangent delta.

3. The method according to claim 1 or claim 2, wherein the surfactant is selected from the group consisting of compounds of the formula:
PEO-PPO-PEO,
PPO-PEO-PPO, 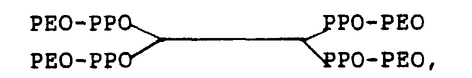 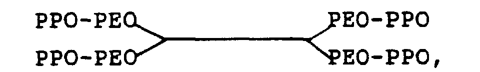
and mixtures thereof, wherein PEO denotes a hydrophillic polyethylene oxide block, and PPO denotes a hydrophobic polypropylene oxide block.

4. The method according to any one of claim to 3, wherein a first elastomer is selected from the group consisting of polybutadiene, styrene-butadiene block copolymers, styrene-butadiene-styrene block copolymers, styrene-butadiene multi-armed block copolymers, and mixtures thereof; and a second elastomer is selected from the group consisting of natural rubber, synthetic polyisoprene, styrene-isoprene block copolymers, styrene-isoprene-styrene block copolymers, styrene-isoprene multi-armed block copolymers, and mixtures thereof.

5. The method according to any one of claims 1 to 4, wherein the tackifying system is selected from the group of tackifiers consisting of polymerized C₅ or C₆ diene resins that are solid, hydrogenated aromatic hydrocarbons that are solid, saturated cycloaliphatic hydrocarbons that are solid, and mixtures thereof, alone or in combination with a polymerized C₅ or C₆ diene tackifier that is liquid, a plasticizing oil, and mixtures thereof.

6. A method according to any one of claims 1 to 5, wherein the surfactant is present in an amount of from 1 to 15% by weight, based on the weight of the surfactant and hot-melt, elastomeric pressure-sensitive adhesive.

7. The method according to any one of claims 1 to 5, wherein the surfactant is present in an amount of from 2 to 5% by weight, based on the weight of the surfactant and hot-melt, elastomeric pressure-sensitive adhesive.

8. The method according to any one of claims 1 to 7, wherein the wax is a polyethylene glycol wax.

9. The method according to any one of claims 1 to 7, wherein the combination of immiscible elastomers comprises from 20 to 50% by weight of the total weight of the elastomers and tackifying system.

10. A method as recited in any one of claims 1 to 9, wherein the tackifying system further comprises a tackifier selected from the group consisting of rosins, rosin esters and polyterpenes.

11. A method as recited in any one of claims 1 to 10, wherein the surfactant has an HLB value of from 12 to greater than 24.

12. A pressure-sensitive adhesive label construction having a layer of an adhesive composition formed in the method of one of claims 1 to 11 and sufficient to improve guillotinability of the resultant label construction.

## Patentansprüche (Patentansprüche für folgende(n) Vertragsstaat(en): AT, BE, CH, LI, DE, DK, FR, GB, IE, IT, LU, NL, SE)

1. Eine Haftklebstoffzusammensetzung aufweisend eine verbesserte Schnittfähigkeit für die Verwendung auf selbstklebenden Etiketten, wobei die Zusammensetzung eine Mischung aus
(a) einem elastomeren Schmelzhaftklebestoff aufweisend eine Kombination von zumindest zwei gegenseitig unmischbaren Elastomeren, welche in Kombination zumindest zwei Glasübergangstemperaturen zur Verfügung stellen, und ein klebrig machendes System aufweisend zumindest einen Klebrigmacher, der vorzugsweise in dem Elastomeren mit der höchsten Glasübergangstemperatur löslich ist; und
(b) eine wirksame Menge eines oberflächenaktiven Stoffs aufweisend hydrophile Polyethylenoxidblöcke und hydrophobe Polypropylenoxidblöcke, wobei der oberflächenaktive Stoff einen Wert des Hydrophil-Lipophil-Gleichgewichts größer als 7 hat;
(c) 0 bis 15 Gew.-% der Mischung eines kompatiblen Wachses aufweist.

2. Haftklebstoffzusammensetzung gemäß Anspruch 1, **dadurch gekennzeichnet,** daß die Komponente (a) aufweist:
(i) das erste Elastomer enthält eine Polybutadienkomponente und zeigt eine erste Glasübergangstemperatur und ein erstes tangentiales Delta gemessen als Funktion der Temperatur, und
(ii) das zweite Elastomer enthält eine Polyisoprenkomponente und zeigt eine zweite Glasübergangstemperatur, die größer als die erste Glasübergangstemperatur ist, und einen zweiten Wert des tangentialen Delta gemessen als Funktion der Temperatur, wobei das erste und zweite Elastomer in einem Verhältnis von 0,5:1 bis 5:1 zur Verfügung gestellt wird, worin ein DMS-Diagramm des tangentialen Delta als Funktion der Temperatur der Kombination der Elastomeren zwei voneinander getrennte Signale zeigt, eine ist der Polybutadienkomponente zurechenbar, die andere ist der Isoprenkomponente zurechenbar, und
(iii) das klebrig machende System weist zumindest einen Klebrigmacher auf, vorzugsweise löslich in dem zweiten Elastomer und ist in einer ausreichenden Menge vorhanden, um einen Anstieg der Temperaturdifferenz der ersten und zweiten Glasübergangstemperatur und einen Anstieg in der Amplitude des zweiten Wertes des tangentialen Delta zu bewirken.

3. Haftklebstoffzusammensetzung gemäß Anspruch 1 oder Anspruch 2, **dadurch gekennzeichnet,** daß der oberflächenaktive Stoff ausgewählt ist aus der Gruppe bestehend aus Verbindungen der Formel
PEO-PPO-PEO,
PPO-PEO-PPO, 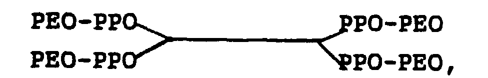 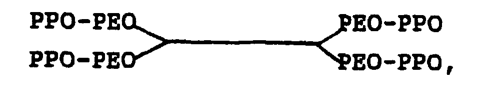
und deren Mischungen, worin PEO einen hydrophilen Polyethylenoxidblock und PPO einen hydrophoben Polypropylenoxidblock kennzeichnet.

4. Haftklebstoffzusammensetzung gemäß einem der Ansprüche 1 bis 3, **dadurch gekennzeichnet,** daß ein erstes Elastomer ausgewählt ist aus der Gruppe bestehend aus Polybutadien, Styrol-Butadien-Blockcopolymeren, Styrol-Butadien-Styrol-Blockcopolymeren, Styrol-Butadien-Sternblockcopolymeren und Mischungen hiervon; und ein zweites Elastomer ausgewählt ist aus der Gruppe bestehend aus natürlichem Kautschuk, synthetischem Polyisopren, Styrol-Isopren-Blockcopolymeren, Styrol-Isopren-Styrol-Blockcopolymeren, Styrol-Isopren-Sternblockcopolymeren und deren Mischungen.

5. Haftklebstoffzusammensetzung gemäß einem der Ansprüche 1 bis 4, **dadurch gekennzeichnet,** daß das klebrig machende System ausgewählt ist aus der Gruppe von Klebrigmachern bestehend aus polymerisierten C₅ oder C₆ Dienharzen, die fest sind, hydrierten aromatischen Kohlenwasserstoffen, die fest sind, gesättigten cycloaliphatischen Kohlenwasserstoffen, die fest sind und Mischungen hiervon, allein oder in Kombination mit einem polymerisierten C₅ oder C₆ Dienklebrigmacher, der flüssig ist, einem weichmachenden Öl, sowie Mischungen hiervon.

6. Haftklebstoffzusammensetzung gemäß einem der Ansprüche 1 bis 5, **dadurch gekennzeichnet,** daß der oberflächenaktive Stoff in einer Menge von 1 bis 15 Gew.-%, bezogen auf das Gewicht des oberflächenaktiven Stoffs und des elastomeren Schmelzhaftklebstoffs, vorhanden ist.

7. Haftklebstoffzusammensetzung gemäß einem der Ansprüche 1 bis 5, **dadurch gekennzeichnet,** daß der oberflächenaktive Stoff in einer Menge von 2 bis 5 Gew.-%, bezogen auf das Gewicht des oberflächenaktiven Stoffs und des elastomeren Schmelzhaftklebstoffs, vorhanden ist.

8. Haftklebstoffzusammensetzung gemäß einem der Ansprüche 1 bis 7, **dadurch gekennzeichnet,** daß das Wachs ein Polyethylenglykolwachs ist.

9. Haftklebstoffzusammensetzung gemäß einem der Ansprüche 1 bis 7, **dadurch gekennzeichnet,** daß die Kombination von unmischbaren Elastomeren von 20 bis 50 Gew.-% des Gesamtgewichts der Elastomeren und des klebrig machenden Systems aufweist.

10. Haftklebstoffzusammensetzung wie in einem der Ansprüche 1 bis 9 beschrieben, **dadurch gekennzeichnet,** daß das klebrig machende System zusätzlich einen Klebrigmacher ausgewählt aus der Gruppe bestehend aus Terpentinharzen, Terpentinharzestern und Polyterpenen aufweist.

11. Haftklebstoffzusammensetzung wie in einem der Ansprüche 1 bis 10 beschrieben, **dadurch gekennzeichnet,** daß der oberflächenaktive Stoff einen HLB-Wert von 12 bis größer als 24 hat.

12. Selbstklebendes Etikett mit einer Schicht einer Klebstoffzusammensetzung wie in einem der Ansprüche 1 bis 11 beschrieben, und ausreichend, um die Schneidemaschinenbearbeitbarkeit des resultierenden Etiketts zu verbessern.

## Patentansprüche (Patentansprüche für folgende(n) Vertragsstaat(en): ES)

1. Verfahren zur Herstellung einer Haftklebstoffzusammensetzung aufweisend eine verbesserte Schnittfähigkeit für die Verwendung auf selbstklebenden Etiketten, wobei das Verfahren das Mischen einer Mischung aus
(a) einem elastomeren Schmelzhaftklebestoff aufweisend eine Kombination von zumindest zwei gegenseitig unmischbaren Elastomeren, welche in Kombination zumindest zwei Glasübergangstemperaturen zur Verfügung stellen, und ein klebrig machendes System aufweisend zumindest einen Klebrigmacher, der vorzugsweise in dem Elastomeren mit der höchsten Glasübergangstemperatur löslich ist; und
(b) eine wirksame Menge eines oberflächenaktiven Stoffs aufweisend hydrophile Polyethylenoxidblöcke und hydrophobe Polypropylenoxidblöcke, wobei der oberflächenaktive Stoff einen Wert des Hydrophil-Lipophil-Gleichgewichts größer als 7 hat;
(c) 0 bis 15 Gew.-% der Mischung eines kompatiblen Wachses aufweist.

2. Verfahren gemäß Anspruch 1, **dadurch gekennzeichnet,** daß die Komponente (a) aufweist:
(i) das erste Elastomer enthält eine Polybutadienkomponente und zeigt eine erste Glasübergangstemperatur und ein erstes tangentiales Delta gemessen als Funktion der Temperatur, und
(ii) das zweite Elastomer enthält eine Polyisoprenkomponente und zeigt eine zweite Glasübergangstemperatur, die größer als die erste Glasübergangstemperatur ist, und einen zweiten Wert des tangentialen Delta gemessen als Funktion der Temperatur, wobei das erste und zweite Elastomer in einem Verhältnis von 0,5:1 bis 5:1 zur Verfügung gestellt wird, worin ein DMS-Diagramm des tangentialen Delta als Funktion der Temperatur der Kombination der Elastomeren zwei voneinander getrennte Signale zeigt, eine ist der Polybutadienkomponente zurechenbar, die andere ist der Isoprenkomponente zurechenbar, und
(iii) das klebrig machende System weist zumindest einen Klebrigmacher auf, vorzugsweise löslich in dem zweiten Elastomer und ist in einer ausreichenden Menge vorhanden, um einen Anstieg der Temperaturdifferenz der ersten und zweiten Glasübergangstemperatur und einen Anstieg in der Amplitude des zweiten Wertes des tangentialen Delta zu bewirken.

3. Verfahren gemäß Anspruch 1 oder Anspruch 2, **dadurch gekennzeichnet,** daß der oberflächenaktive Stoff ausgewählt ist aus der Gruppe bestehend aus Verbindungen der Formel
PEO-PPO-PEO,
PPO-PEO-PPO, 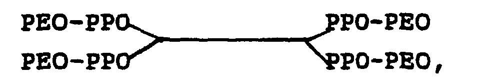 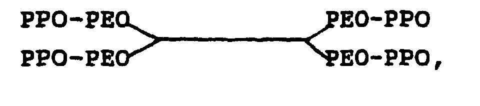
und deren Mischungen, worin PEO einen hydrophilen Polyethylenoxidblock und PPO einen hydrophoben Polypropylenoxidblock kennzeichnet.

4. Verfahren gemäß einem der Ansprüche 1 bis 3, **dadurch gekennzeichnet,** daß ein erstes Elastomer ausgewählt ist aus der Gruppe bestehend aus Polybutadien, Styrol-Butadien-Blockcopolymeren, Styrol-Butadien-Styrol-Blockcopolymeren, Styrol-Butadien-Sternblockcopolymeren und Mischungen hiervon; und ein zweites Elastomer ausgewählt ist aus der Gruppe bestehend aus natürlichem Kautschuk, synthetischem Polyisopren, Styrol-Isopren-Blockcopolymeren, Styrol-Isopren-Styrol-Blockcopolymeren, Styrol-Isopren-Sternblockcopolymeren und deren Mischungen.

5. Verfahren gemäß einem der Ansprüche 1 bis 4, **dadurch gekennzeichnet,** daß das klebrig machende System ausgewählt ist aus der Gruppe von Klebrigmachern bestehend aus polymerisierten C₅ oder C₆ Dienharzen, die fest sind, hydrierten aromatischen Kohlenwasserstoffen, die fest sind, gesättigten cycloaliphatischen Kohlenwasserstoffen, die fest sind und Mischungen hiervon, allein oder in Kombination mit einem polymerisierten C₅ oder C₆ Dienklebrigmacher, der flüssig ist, einem weichmachenden Öl, sowie Mischungen hiervon.

6. Verfahren gemäß einem der Ansprüche 1 bis 5, **dadurch gekennzeichnet,** daß der oberflächenaktive Stoff in einer Menge von 1 bis 15 Gew.-%, bezogen auf das Gewicht des oberflächenaktiven Stoffs und des elastomeren Schmelzhaftklebstoffs, vorhanden ist.

7. Verfahren gemäß einem der Ansprüche 1 bis 5, **dadurch gekennzeichnet,** daß der oberflächenaktive Stoff in einer Menge von 2 bis 5 Gew.-%, bezogen auf das Gewicht des oberflächenaktiven Stoffs und des elastomeren Schmelzhaftklebstoffs, vorhanden ist.

8. Verfahren gemäß einem der Ansprüche 1 bis 7, **dadurch gekennzeichnet,** daß das Wachs ein Polyethylenglykolwachs ist.

9. Verfahren gemäß einem der Ansprüche 1 bis 7, **dadurch gekennzeichnet,** daß die Kombination von unmischbaren Elastomeren von 20 bis 50 Gew.-% des Gesamtgewichts der Elastomeren und des klebrig machenden Systems aufweist.

10. Verfahren wie in einem der Ansprüche 1 bis 9 beschrieben, **dadurch gekennzeichnet,** daß das klebrig machende System zusätzlich einen Klebrigmacher ausgewählt aus der Gruppe bestehend aus Terpentinharzen, Terpentinharzestern und Polyterpenen aufweist.

11. Verfahren wie in einem der Ansprüche 1 bis 10 beschrieben, **dadurch gekennzeichnet,** daß der oberflächenaktive Stoff einen HLB-Wert von 12 bis größer als 24 hat.

12. Selbstklebendes Etikett mit einer Schicht einer Klebstoffzusammensetzung wie in einem Verfahren der Ansprüche 1 bis 11 gebildet, und ausreichend, um die Schneidemaschinenbearbeitbarkeit des resultierenden Etiketts zu verbessern.

## Revendications (Revendications pour l'(les) Etat(s) contractant(s) suivant(s): AT, BE, CH, CI, DE, DK, FR, GB, IE, IT, LU, NL, SE)

1. Composition adhésive autocollante présentant une facilité de découpage améliorée, à utiliser dans une construction d'étiquettes autocollantes, ladite composition comprenant un mélange
(a) d'un adhésif élastomère thermofusible autocollant comprenant une combinaison d'au moins deux élastomères non miscibles l'un avec l'autre qui, une fois combinés, fournissent au mois deux températures de transition vitreuse et d'un système d'adhésivité comprenant au moins un agent d'adhésivité qui est soluble de façon préférentielle dans l'élastomère de température de transition vitreuse la plus élevée; et
(b) d'une quantité efficace d'un tensioactif composé de blocs de poly(oxyde d'éthylène) hydrophiles et de blocs de poly(oxyde de propylène) hydrophobes, ledit tensioactif ayant une balance hydrophile-lipophile (BHL) supérieure à 7;
(c) de 0 à 15%, en poids du mélange, d'une cire compatible.

2. Composition adhésive autocollante selon la revendication 1, dans laquelle dans le constituant (a) :
(i) le premier élastomère contient un constituant polybutadiène et présente une première température de transition vitreuse et une première valeur de tangente delta mesurée en fonction de la température, et
(ii) le second élastomère contient un constituant polyisoprène et présente une seconde température de transition vitreuse qui est supérieure à ladite première température de transition vitreuse et une seconde valeur de tangente delta mesurée en fonction de la température, lesdits premier et second élastomères étant présents dans une proportion de 0,5:1 à 5:1, selon lequel une courbe SMD de tangente delta en fonction de la température pour la combinaison d'élastomères présente deux pics distincts, l'un attribuable à un constituant polybutadiène et l'autre attribuable un constituant polyisoprène, et
(iii) le système d'adhésivité comprend au moins un agent d'adhésivité, soluble de façon préférentielle dans le second élastomère et présent en une quantité suffisante pour provoquer une augmentation de la différence de température entre lesdites première et seconde températures de transition vitreuse et une augmentation de l'amplitude de ladite seconde valeur de tangente delta.

3. Composition adhésive autocollante selon la revendication 1 ou la revendication 2, dans laquelle le tensioactif est choisi dans le groupe constitué par les composés de formule:
PEO-PPO-PEO,
PPO-PEO-PPO, 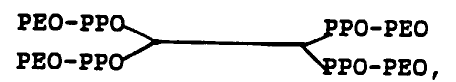 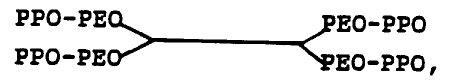
et leurs mélanges, où PEO désigne un bloc poly(oxyde d'éthylène) hydrophile et PPO désigne un bloc poly(oxyde de propylène) hydrophobe.

4. Composition adhésive autocollante selon l'une quelconque des revendications 1 à 3, dans laquelle un premier élastomère est choisi dans le groupe constitué par le polybutadiène, les copolymères séquencés styrène/ butadiène, les copolymères séquencés styrène/butadiène/styrène, les copolymères séquencés styrène/butadiène à bras multiples, et leurs mélanges; et un second élastomère est choisi dans le groupe constitué par le caoutchouc naturel, le polyisoprène synthétique, les copolymères séquences styrène/isoprène, les copolymères séquencés styrène/isoprène/styrène, les copolymères séquences styrène/isoprène à bras multiples, et leurs mélanges.

5. Composition adhésive autocollante selon l'une quelconque des revendications 1 à 4, dans laquelle le système d'adhésivité est choisi dans le groupe constitué par les agents d'adhésivité constitués de résines diéniques en C₅ ou C₆ polymérisées qui sont solides, les hydrocarbures aromatiques hydrogénés qui sont solides, les hydrocarbures cycloaliphatiques saturés qui sont solides, et leurs mélanges, seuls ou en combinaison avec un agent d'adhésivité diénique en C₅ ou C₆ polymérisé qui est liquide, une huile plastifiante, et leurs mélanges.

6. Composition adhésive autocollante selon l'une quelconque des revendications 1 à 5, dans laquelle le tensioactif est présent à raison de 1% à 15% en poids, par rapport au poids du tensioactif et de l'adhésif élastomère thermofusible autocollant.

7. Composition adhésive autocollante selon l'une quelconque des revendications 1 à 5, dans laquelle le tensioactif est présent à raison de 2 à 5% en poids, par rapport au poids du tensioactif et de l'adhésif élastomère thermofusible autocollant.

8. Composition adhésive autocollante selon l'une quelconque des revendications 1 à 7, dans laquelle la cire est une cire de polyéthylèneglycol.

9. Composition adhésive autocollante selon l'une quelconque des revendications 1 à 7, dans laquelle la combinaison d'élastomères non miscibles constitue de 20 à 50% en poids du poids total des élastomères et du système d'adhésivité.

10. Composition adhésive autocollante telle que décrite dans l'une quelconque des revendications 1 à 9, dans laquelle le système d'adhésivité comprend en outre un agent d'adhésivité choisi dans le groupe constitué par les colophanes, les esters de colophane et les polyterpènes.

11. Composition adhésive autocollante telle que décrite dans l'une quelconque des revendications 1 à 10, dans laquelle le tensioactif possède une BHL de 12 à plus de 24.

12. Construction d'étiquettes adhésives autocollantes présentant une couche d'une composition adhésive telle que décrite dans l'une quelconque des revendications 1 à 11 et suffisante pour améliorer la facilité de découpage au massicot de la construction d'étiquettes résultante.

## Revendications (Revendications pour l'(les) Etat(s) contractant(s) suivant(s): ES)

1. Procédé de production d'une composition adhésive autocollante présentant une facilité de découpage améliorée, à utiliser dans une construction d'étiquettes autocollantes, ledit procédé comprenant le fait de mélanger un mélange
(a) d'un adhésif élastomère thermofusible autocollant comprenant une combinaison d'au moins deux élastomères non miscibles l'un avec l'autre qui, une fois combinés, fournissent au moins deux températures de transition vitreuse et d'un système d'adhésivité comprenant au moins un agent d'adhésivité qui est soluble de façon préférentielle dans l'élastomère de température de transition vitreuse la plus élevée; et
(b) d'une quantité efficace d'un tensioactif composé de blocs de poly(oxyde d'éthylène) hydrophiles et de blocs de poly(oxyde de propylène) hydrophobes, ledit tensioactif ayant une balance hydrophile-lipophile (BHL) supérieure à 7;
(c) de 0 à 15%, en poids du mélange, d'une cire compatible.

2. Procédé selon la revendication 1, dans lequel le constituant (a) comprend:
(i) le premier élastomère contient un constituant polybutadiène et présente une première température de transition vitreuse et une première tangente delta mesurée en fonction de la température, et
(ii) le second élastomère contient un constituant polyisoprène et présente une seconde température de transition vitreuse qui est supérieure à ladite première température de transition vitreuse et une seconde valeur de tangente delta mesurée en fonction de la température, lesdits premier et second élastomères étant présents dans une proportion de 0,5:1 à 5:1, selon lequel une courbe SMD de tangente delta en fonction de la température pour la combinaison d'élastomères présente deux pics distincts, l'un attribuable à un constituant polybutadiène et l'autre attribuable un constituant polyisoprène, et
(iii) le système d'adhésivité comprend au mois un agent d'adhésivité, soluble de façon préférentielle dans le second élastomère et présent en une quantité suffisante pour provoquer une augmentation de la différence de température entre lesdites première et seconde températures de transition vitreuse et une augmentation de l'amplitude de ladite seconde valeur de tangente delta.

3. Procédé selon la revendication 1 ou la revendication 2, dans lequel le tensioactif est choisi dans le groupe constitué par les composés de formule:
PEO-PPO-PEO,
PPO-PEO-PPO, 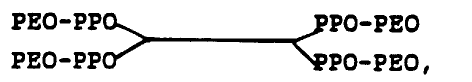 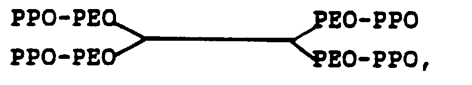
et leurs mélanges, où PEO désigne un bloc poly(oxyde d'éthylène) hydrophile et PPO désigne un bloc poly(oxyde de propylène) hydrophobe.

4. Procédé selon l'une quelconque des revendications 1 à 3, dans lequel un premier élastomère est choisi dans le groupe constitué par le polybutadiène, les copolymères séquencés styrène/butadiène, les copolymères séquencés styrène/butadiène/styrène, les copolymères séquencés styrène/butadiène à bras multiples, et leurs mélanges; et un second élastomère est choisi dans le groupe constitué par le caoutchouc naturel, le polyisoprène synthétique, les copolymères séquencés styrène/isoprène, les copolymères séquencés styrène/isoprène/styrène, les copolymères séquencés styrène/isoprène à bras multiples. et leurs mélanges.

5. Procédé selon l'une quelconque des revendications 1 à 4, dans lequel le système d'adhésivité est choisi dans le groupe constitué par les agents d'adhésivité constitués de résines diéniques en C₅ ou C₆ polymérisées qui sont solides, les hydrocarbures aromatiques hydrogénés qui sont solides, les hydrocarbures cycloaliphatiques saturés qui sont solides, et leurs mélanges, seuls ou en combinaison avec un agent d'adhésivité diénique en C₅ ou C₆ polymérisé qui est liquide, une huile plastifiante, et leurs mélanges.

6. Procédé selon l'une quelconque des revendications 1 à 5, dans lequel le tensioactif est présent à raison de 1% à 15% en poids, par rapport au poids du tensioactif et de l'adhésif élastomère thermofusible autocollant.

7. Procédé selon l'une quelconque des revendications 1 à 5, dans lequel le tensioactif est présent à raison de 2 à 5% en poids, par rapport au poids du tensioactif et de l'adhésif élastomère thermofusible autocollant.

8. Procédé selon l'une quelconque des revendications 1 à 7, dans lequel la cire est une cire de polyéthylèneglycol.

9. Procédé selon l'une quelconque des revendications 1 à 7, dans lequel la combinaison d'élastomères non miscibles constitue de 20 à 50% en poids du poids total des élastomères et du système d'adhésivité.

10. Procédé tel que décrit dans l'une quelconque des revendications 1 à 9, dans lequel le système d'adhésivité comprend en outre un agent d'adhésivité choisi dans le groupe constitué par les colophanes, les esters de colophane et les polyterpènes.

11. Procédé tel que décrit dans l'une quelconque des revendications 1 à 10, dans lequel le tensioactif possède une BHL de 12 à plus de 24.

12. Construction d'étiquettes adhésives autocollantes présentant une couche d'une composition adhésive formée par le procédé de l'une quelconque des revendications 1 à 11 et suffisante pour améliorer la facilité de découpage au massicot de la construction d'étiquettes résultante.
